# FASCICULE DE BREVET EUROPEEN

(11) **EP 3 132 220 B1**
(45) Date de publication et mention de la délivrance du brevet: **31.07.2019**
(21) Numéro de dépôt: 15727303.8
(22) Date de dépôt: 03.04.2015
(51) Int. Cl.: F28D 9/00, F28F 9/02, F02B 29/04, F02M 26/00, F28D 21/00

(54) **ECHANGEUR DE CHALEUR POUR VÉHICULE AUTOMOBILE**
WÄRMETAUSCHER FÜR EIN KRAFTFAHRZEUG
HEAT EXCHANGER FOR A MOTOR VEHICLE

(30) Priorité: 04.04.2014 FR 1453010
(43) Date de publication de la demande: 22.02.2017
(73) Titulaire: Valeo Systemes Thermiques, 78320 Le Mesnil Saint Denis (FR)
(72) Inventeur: DEVEDEUX, Sébastien, 78000 Versailles (FR); ODILLARD, Laurent, 72390 Le Luart (FR); FERLAY, Benjamin, 78720 Cernay La Ville (FR)
(74) Mandataire: Neuviale, Bertrand
(86) Numéro de dépôt international: PCT/EP2015/000722
(87) Numéro de publication internationale: WO 2015/149949

(56) Documents cités:
- EP-A1- 1 830 048
- WO-A1-2012/159730
- WO-A1-2013/078531
- DE-A1- 4 313 505
- GB-A- 2 130 354
- US-A1- 2013 133 866

## Description

L'invention concerne un échangeur de chaleur selon le préambule de la revendication 1, notamment pour l'alimentation en air des moteurs de véhicules automobiles, et plus particulièrement les moteurs dont l'air d'alimentation provient d'un compresseur ou d'un turbocompresseur délivrant de l'air dit de suralimentation. Un tel échangeur de chaleur est connu de US2013/0133866.

Dans la suite, on entendra par air d'alimentation, ou de suralimentation, aussi bien de l'air provenant du seul circuit d'admission d'air du moteur qu'un mélange d'air et de gaz d'échappement récupéré en sortie du moteur, conformément au système généralement connu sous l'acronyme d'EGR (« Exhaust Gas Recirculation »).

Afin d'augmenter la densité de l'air d'admission d'un moteur turbocompressé, il est connu de refroidir l'air de suralimentation sortant du compresseur au moyen d'un échangeur de chaleur qui est aussi appelé refroidisseur d'air de suralimentation ou RAS en abrégé.

Un refroidisseur d'air de suralimentation comporte au moins un faisceau d'échange de chaleur. Il est en particulier connu des faisceaux d'échange de chaleur comportant un empilement de plaques formant alternativement des canaux de circulation pour l'air suralimenté à refroidir et des canaux pour la circulation du liquide de refroidissement de l'échangeur.

Cet échangeur est généralement intégré dans le collecteur d'admission du moteur à combustion interne. L'efficacité de l'échange thermique dépend fortement du niveau de fuite entre le faisceau et le collecteur. Une mauvaise configuration à ce niveau entraîne une baisse de performance significative de l'échangeur. De plus, il est primordial de garantir un positionnement du faisceau précis et reproductible dans le collecteur afin de favoriser un bon fonctionnement.

A cet effet, l'invention concerne un échangeur de chaleur entre un premier et un second fluide, ayant les caractéristiques de la revendication 1.

Par « rebord », on entend toute partie de contour de la plaque placée transversalement dans le flux de second fluide, en particulier tout partie de contour de la plaque dont la fonction n'est pas l'assemblage de la plaque au reste du faisceau. Autrement dit, le jeu prévu entre le faisceau et le boîtier est obstrué par les plaques du faisceau elles mêmes, par l'intermédiaire de leur rebord. Grâce à celui ci, on empêche un passage direct du second fluide d'une entrée vers une sortie du boîtier sans passer par le faisceau d'échange de chaleur. On évite de la sorte qu'une fraction du second fluide sorte de l'échangeur sans avoir été refroidi.

Avantageusement, le boîtier est configuré pour être relié à des tubulures d'admission d'air d'un moteur. Ledit échangeur de chaleur sert notamment de refroidisseur d'air de suralimentation du moteur.

Selon d'autres caractéristiques de l'invention qui pourront être prises seules ou en combinaison :
- le ou les rebords sont perpendiculaires à un plan d'extension de leur plaque respective,
- ledit faisceau présente des faces latérales et les rebords s'étendent entre l'une au moins desdites faces latérales et ledit boîtier,
- au niveau de l'une au moins desdites faces latérales, voire de chacune des faces latérales du faisceau, les rebords sont disposés successivement le long d'une même direction parallèle à une direction d'empilement desdites plaques,
- lesdits rebords successifs situés le long d'une même face latérale forment un rebord latéral d'ensemble,
- ledit boîtier est fermé sur l'une de ses faces par une plaque dite bride frontale, à laquelle ledit faisceau d'échange de chaleur est fixé, notamment de façon étanche,
- ledit bord et le ou lesdits rebords forment un contour en U du faisceau,
- le ou lesdits rebords sont situés au niveau d'une face de sortie du faisceau,
- lesdits rebords font saillie à partir d'un sommet des plaques,
- lesdits rebords sont disposés le long d'un bord d'une face longitudinale d'entrée ou de sortie du second fluide du faisceau, en particulier un bord de la face longitudinale de sortie du second fluide du faisceau,
- ledit faisceau d'échange de chaleur est parallélépipédique rectangle,
- ledit faisceau présente une grande face assujettie à ladite bride frontale, une grande face opposée, lesdites faces latérales reliant lesdites grandes faces, ledit faisceau d'échange de chaleur étant fermé sur la grande face opposée à ladite bride frontale par ladite plaque structurelle,
- le ou lesdits rebords sont perpendiculaires aux faces latérales du faisceau,
- le ou lesdits rebords et/ou ledit bord sont issus de matière des plaques de faisceau et/ou de la plaque structurelle,
- le ou lesdits rebords et/ou ledit bord sont montés rapportés sur les plaques de faisceau et/ou la plaque structurelle,
- le ou lesdits rebords sont aptes à s'engager contre une paroi du boîtier et/ou une partie complémentaire du boîtier, en particulier par l'intermédiaire d'une section droite et/ou en pli, notamment régulière, du ou desdits rebords,
- le ou lesdits rebords et/ou ledit bord portent un joint apte à s'engager contre la paroi du boîtier et/ou ladite partie complémentaire du boîtier,
- le ou lesdits rebords et/ou ledit bord comportent une partie de contact, notamment une partie de contact externe profilée, apte à être appliquée, notamment comprimée, contre la paroi du boîtier ou ladite partie complémentaire du boîtier, en sorte de conférer une étanchéité au second fluide entre le faisceau et le boîtier,
- ladite partie de contact comporte un revêtement en matériau de contact, tel que colle, résine, matière thermoplastique ou élastomère, tel que ledit joint
- ledit revêtement est apte à être collé et/ou fixé, notamment clippé, sur le ou lesdits rebords et/ou ledit bord,
- ledit revêtement ou joint d'étanchéité est conformé en U pour s'étendre le long desdites faces latérales du faisceau et la plaque structurelle,
- ledit revêtement ou joint d'étanchéité est pourvu de deux zones charnières, une à chacune des extrémités de la branche principale du U correspondant à la plaque structurelle, lesdites zones charnières étant aptes à élargir l'ouverture du U et à la ramener à un profil initial pour permettre un montage facile du revêtement ou joint sur le rebord,
- ledit boîtier comporte un logement pour le ou lesdits rebords, ledit logement étant conformé dans un profil de nervure,
- ledit logement est conformé dans un profil de nervure permettant notamment le montage coulissant du faisceau équipé du ou desdits rebords dans le boîtier,
- ledit logement est conformé rigide pour permettre une tenue mécanique du faisceau dans le boîtier, notamment en jouant le rôle de raidisseur, ce qui limite les jeux et le porte à faux dans la liaison du faisceau au boîtier et contient les vibrations, de sorte que les modes des fréquences de vibration du faisceau sont augmentés et les amplitudes des vibrations sur chaque mode sont atténuées,
- ledit joint est comprimé dans ledit logement,
- le joint comporte un talon support coopérant avec ledit logement, notamment pour permettre le maintien du faisceau dans le boîtier.

L'invention concerne également un module d'admission de moteur de véhicule comportant un échangeur de chaleur tel que décrit ci-dessus.

D'autres avantages et caractéristiques de l'invention apparaitront encore au regard de la description d'exemples de réalisation de l'invention et en référence aux dessins annexés, dans lesquels :
- la figure 1 est une vue schématique en perspective éclatée d'un échangeur de chaleur selon un mode de réalisation de l'invention, le ou lesdits rebords de l'échangeur étant équipés d'un joint d'étanchéité,
- la figure 2 est une vue schématique en perspective du faisceau d'échange de chaleur et du joint d'étanchéité, en cours de montage, de l'échangeur de chaleur selon la figure 1,
- la figure 3 est une vue agrandie en perspective du joint d'étanchéité, montrant en particulier sa section transversale,
- la figure 4 est une vue en élévation du faisceau d'échange de chaleur, de l'échangeur de la figure 1,
- la figure 5 est une vue en coupe partielle selon la coupe A-A de la figure 4,
- la figure 6 montre de façon agrandie un détail de la figure 4 au niveau d'une zone charnière du joint d'étanchéité,
- Les figures 7 et 8 sont des vues du faisceau d'échange de chaleur montrant des modes de montage du joint d'étanchéité,
- la figure 9 est une vue en perspective des rebords de plaques du faisceau de la figure 4,
- la figure 10 est une coupe partielle analogue à la figure 5 du rebord de plaque et de son joint d'étanchéité,
- la figure 11 est une vue en coupe partielle du rebord d'une plaque structurelle du faisceau et de son joint d'étanchéité,
- la figure 12 est une vue en coupe partielle analogue à la figure 5 montrant une variante de réalisation du rebord de plaque et de son joint d'étanchéité.

En référence aux dessins, aux figues 1 et 2 en particulier, l'invention concerne un échangeur de chaleur 1, notamment pour une alimentation en air d'un moteur thermique de véhicule automobile, comme ici. L'échangeur permet un échange de chaleur entre un premier fluide F1 et un second fluide F2. Dans l'application illustrée, le premier fluide F1 est un liquide de refroidissement, notamment de l'eau glycolée, et le second fluide F2 est l'air de suralimentation, à refroidir. Cet échangeur 1 forme ainsi, par exemple, un refroidisseur d'air de suralimentation intégré dans un collecteur 3 d'admission du moteur à combustion interne.

Ledit échangeur 1 comporte au moins un faisceau 5 d'échange de chaleur parcouru par le premier fluide F1 et un boîtier 7 dans lequel ledit faisceau 5 d'échange de chaleur est logé de façon à être traversé par ledit second fluide F2.

Le faisceau d'échange de chaleur comporte des plaques 23 de circulation du premier fluide F1 empilées l'une sur l'autre.

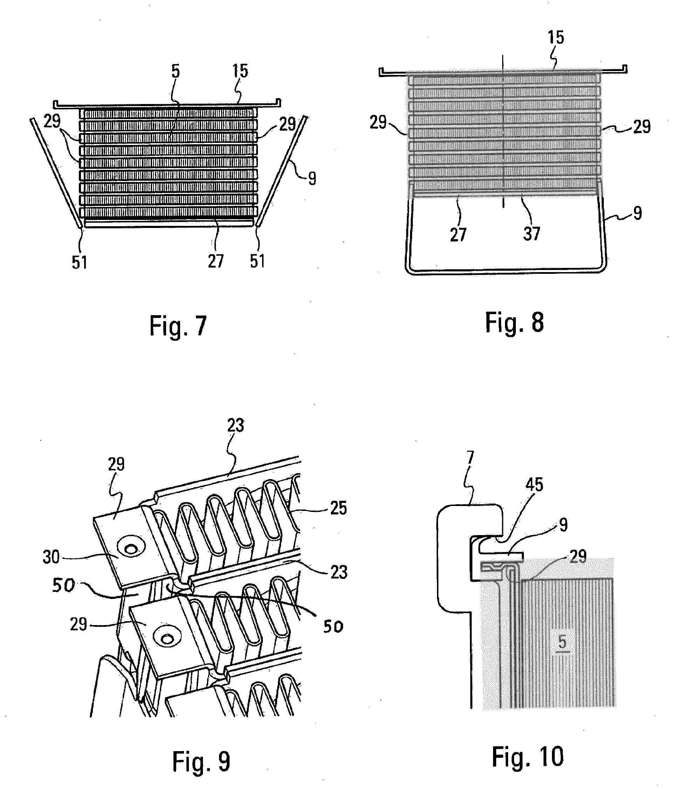

Selon l'invention, lesdites plaques 23 présentent un ou plusieurs rebords 29, tels que représentés aux figures 9 et 10, disposés entre ledit faisceau 5 d'échange de chaleur et ledit boîtier 7 pour limiter un contournement du faisceau par le second fluide F2.

Grâce à l'invention, on limite, voire on empêche, un passage du second fluide F2 entre le faisceau 5 d'échange de chaleur et le boîtier 7, notamment en créant une perte de charge sur le passage. Une telle caractéristique permet de fortement augmenter le rendement thermique de l'échangeur. En effet, en raison de la forte densité du faisceau et donc de la perte de charge conséquente sur le second fluide F2 dans le faisceau, une fuite même minime entre le boîtier et le faisceau entrainerait un débit important de gaz non refroidi à travers l'échangeur.

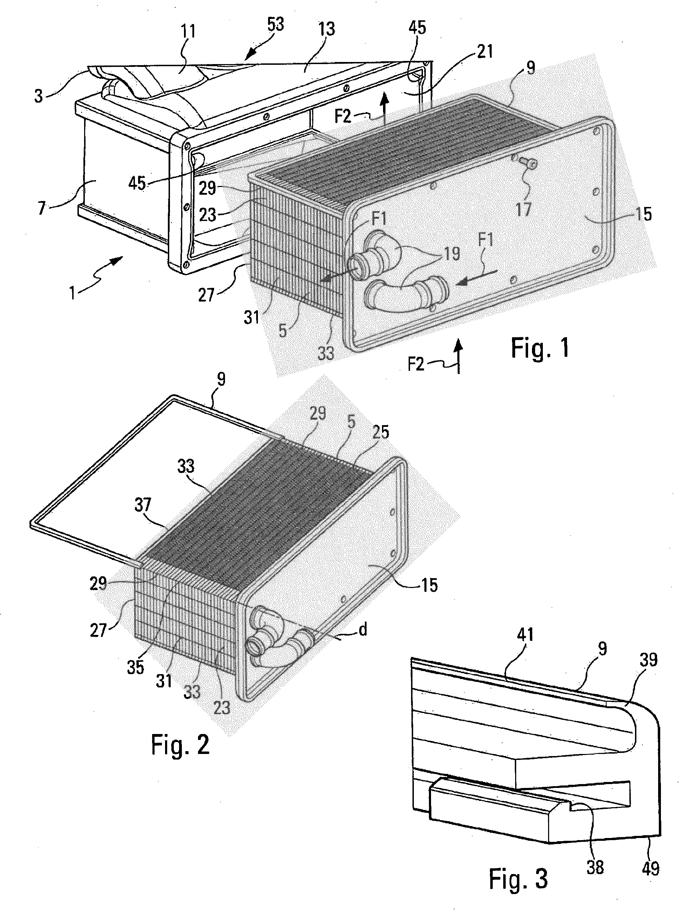

Ainsi qu'il est visible à la figure 1, le boîtier 7 est ici configuré pour être relié à des tubulures 11 d'admission du moteur. Il comporte notamment une proéminence ou collecteur de sortie13 sur l'une de ses grandes faces, par laquelle il est relié auxdites tubulures 11 d'admission. Un collecteur d'entrée du second fluide est situé au niveau de la face opposée.

Ledit boîtier 7 est ici fermé sur l'une de ses faces par une plaque dite bride frontale 15, à laquelle ledit faisceau 5 d'échange de chaleur est fixé de façon étanche, notamment par brasage. Cette bride frontale 15 est fixée, par exemple, par des vis 17 au boîtier 7. Un joint d'étanchéité non représenté pourra être utilisé entre ladite bride 15 et ledit boîtier 7 pour éviter des fuites de second fluide vers l'extérieur. Ladite bride 15 comporte en outre des conduits 19 d'entrée et sortie du premier fluide F1 du faisceau d'échange de chaleur. Il est à noter que cette bride frontale 15 ferme une ouverture 21 du boîtier destinée au passage du faisceau 5 d'échange de chaleur, lors de son montage dans le boîtier.

Ledit faisceau 5 d'échange de chaleur est ici parallélépipédique rectangle. Il comporte un empilement de plaques 23 formant alternativement des canaux de circulation pour le premier et le second fluide. Les plaques sont, par exemple, assemblées par paire pour former des canaux de circulation pour le premier fluide. Ici lesdits canaux sont configurés en U et le premier fluide entre et sort des paires de plaques au niveau d'orifices situés d'un même côté 31 du faisceau 5. Les orifices des paires de plaques communiquent entre eux de paire en paire afin de former un collecteur d'entrée et un collecteur de sortie pour le premier fluide, communiquant respectivement avec les conduits 19 de la bride frontale 15. Lesdites plaques sont formées, par exemple, par emboutissage, empilées puis brasées entre elles.

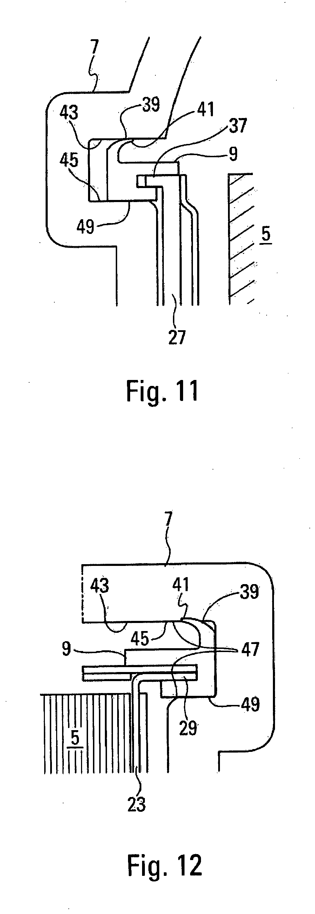

Les rebords 29 sont issus ici des plaques, formés par pliage, à simple épaisseur tel qu'illustré aux figures 9 et 10 ou en double épaisseur, figure 12, selon une variante de réalisation. Ils forment en succession un rebord d'ensemble 30, notamment rectiligne. Ces rebords pourraient encore être fixés rapportés aux plaques, par exemple par brasage.

Comme cela est plus particulièrement visible à la figure 9, lesdites plaques 23 présentent, par exemple, des bords latéraux 50, situés au niveau des faces latérales du faisceau. Lesdits bords latéraux 50 sont issus du plan desdites plaques 23, notamment par pliage. Ici, lesdits bords latéraux 50 des plaques 23 se recouvrent partiellement d'une paire de plaques à l'autre.

Lesdits rebords 29 sont issus, avantageusement par pliage, desdits bords latéraux 50, en particulier des bords latéraux 50 situés intérieurement. Autrement dit, le rebord 29 de l'une des plaques 23 recouvre le bord latéral 50 recouvrant le bord latéral 50 dont ledit rebord 29 est lui-même issu.

L'échange de chaleur entre les plaques 23 et le second fluide pourra se faire, en partie, par l'intermédiaire de turbulateurs 25 situés entre les paires de plaques.

Ledit faisceau 5 d'échange de chaleur est ici fermé sur une grande face, à l'opposé de la ladite bride frontale 15, par une plaque dite plaque structurelle 27. Cette plaque 27 est par exemple fixée au faisceau par brasage. En variante, il pourra s'agir de l'une des plaques du faisceau.

Les plaques 23 pourront présenter chacune un rebord 29 ménagé en saillie de leur plan, notamment perpendiculaire à leur plan. Le rebord 29 est ici perpendiculaire aux faces latérales 31 du faisceau, à savoir les faces adjacentes aux faces longitudinales 33 d'entrée et de sortie de l'air du faisceau. Ce ou ces rebords 29, particulièrement visibles aux figures 7 à 10, sont préférentiellement agencés en une pluralité de rebords 29 identiques, espacés régulièrement l'un de l'autre au niveau des paires de plaques.

Le ou lesdits rebords 29 sont avantageusement disposés le long d'une même direction parallèle à la direction d'empilement des plaques. Ils sont situés, par exemple, le long d'un bord 35 de face longitudinale 33 du faisceau, ici la face longitudinale de sortie du second fluide.

Autrement dit, lesdits rebords 29 forment, comme mentionné, un rebord d'ensemble selon une ligne d qui est ici une ligne de bord 35 de ladite face longitudinale 33 de sortie du second fluide du faisceau.

Lesdits rebords 29 pourront être prolongés le long de ladite face longitudinale 33 afin de venir au contact des turbulateurs 25. Ils forment ainsi un écran empêchant le passage du second fluide au niveau de zones des plaques non revêtues desdits turbulateurs, ce qui favorise l'échange de chaleur.

Ladite plaque structurelle 27 comporte également au moins un bord 37, ici un bord régulier 37, figure 11, passant par un plan contenant le ou lesdits rebords 29 des plaques 23. Ce bord 37 est rectiligne, perpendiculaire au plan de la plaque structurelle 27.

Bien que lesdits rebords 29 et/ou ledit bord 37 soient aptes à limiter par eux même le passage du second fluide entre le boîtier et le faisceau, un joint ou revêtement d'étanchéité 9 est avantageusement monté le long dudit ou desdits rebords 29 de plaque de faisceau et/ou dudit bord 37 de plaque structurelle, en étant fixé, par exemple clippé ou collé, à ces derniers.

Avantageusement, ledit joint d'étanchéité 9 est monté sur lesdits rebords 29 de plaque de faisceau et sur ledit bord 37 de plaque structurelle, sur trois côtés du faisceau 5, comme ici. Il est notamment configuré avec un profil en U, figures 7 et 8, pour s'étendre longitudinalement en continuité sur lesdits rebords 29 de plaque de faisceau et ledit rebord 37 de plaque structurelle, sur chacune desdites faces latérales 31 et plaque structurelle 27 du faisceau, jusqu'à venir en contact avec ladite bride 15.

De plus, ledit joint d'étanchéité 9 a une section en U, régulière, figure 3, apte à permettre au joint de s'engager sur ou recevoir lesdits rebords 29 de plaque de faisceau et ledit bord 37 de plaque structurelle. L'engagement peut être relativement serré en sorte de retenir le joint, après l'engagement. Les profils des rebords 29 et 37 sont ici identiques mais ils pourront être différents, le joint d'étanchéité 9 ayant un profil complémentaire.

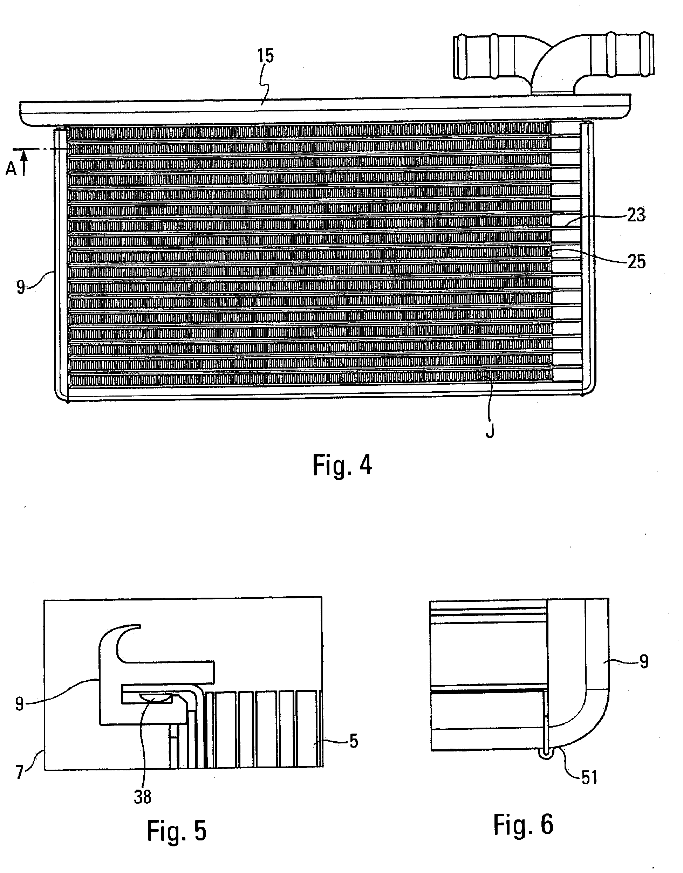

De préférence, ledit joint d'étanchéité 9 est apte à être fixé, notamment clippé par un crochet 38 du U, tel que cela apparait à la figure 5, sur ledit rebord 29 de plaque de faisceau et ledit rebord 37 de plaque structurelle, après son engagement sur ces derniers.

Ledit joint d'étanchéité 9 comporte, figures 11 et 12, une lèvre 39 externe profilée, ici selon un profil longitudinal de section arrondie et effilée à l'extrémité 41.

Ladite lèvre externe 39 est apte à être appliquée, notamment comprimée, contre une paroi 43 du boîtier, en sorte de conférer une étanchéité au second fluide entre le faisceau et le boîtier.

Plus précisément, le joint 9 est logé dans un évidement 45 profilé du boîtier, complémentaire du joint. L'évidement 45 présente ici une section rectangulaire, laquelle accueille le joint 9, notamment de façon comprimée entre deux faces latérales opposées 47 de l'évidement. Le joint 9 comporte notamment une partie en forme de talon 49 à l'opposé de la lèvre 39, ce qui lui permet de maintenir le faisceau 5 solidairement au boîtier 7.

Ledit joint d'étanchéité 9 est avantageusement un élément thermoplastique ou élastomère, notamment déformable selon une certaine tolérance pour supporter ladite compression d'étanchéité. Cette tolérance avant et après compression est par exemple comprise 0,1 mm et 0,25 mm.

Comme mentionné précédemment, ledit joint d'étanchéité 9 est conformé en U pour s'étendre le long desdites faces latérales 31 et la plaque structurelle 27 du faisceau. A chacune des extrémités de la branche principale du U, correspondant à la plaque structurelle 27, le joint d'étanchéité 9 est ici pourvu d'une zone charnière 51, voir les figures 6 et 7, lesdites deux zones charnières 51 étant aptes à accroître l'ouverture du U au montage du joint sur le faisceau et à la ramener à sa configuration initiale du U, à l'engagement sur lesdits rebords 29, 37. Cette disposition facilite le montage du joint sur le faisceau. Le joint peut encore être glissé sur les rebords 29, figure 8, jusqu'à l'engagement sur le rebord 37 en fin de montage du joint.

Ledit boîtier 7 comporte avantageusement un logement pour ledit joint d'étanchéité 9, lequel est ici ledit évidement 45. Ce logement 45 est conformé dans un profil de nervure, en particulier dans ladite section rectangulaire, pour permettre le montage coulissant, depuis l'ouverture 21, du faisceau 5 équipé du joint 9 dans le boîtier 7.

Ledit logement 45 pourra être conformé rigide pour permettre une tenue mécanique du faisceau 5 dans le boîtier 7, notamment en jouant le rôle de raidisseur. Cette disposition permet de supprimer les jeux et le porte à faux dans la liaison du faisceau au boîtier et amortit les vibrations. De cette manière, les modes des fréquences de vibration du faisceau et par là de l'échangeur 1, sont augmentés et les amplitudes des vibrations sur chaque mode sont atténuées. La fiabilité de l'échangeur et son fonctionnement silencieux sont améliorés.

Le procédé de montage d'un tel échangeur de chaleur 1 est à présent décrit. Le procédé comprend les étapes suivantes :
- le montage dudit joint d'étanchéité 9 sur le faisceau 5 d'échange de chaleur, notamment monté sur le ou lesdits rebords 29 de plaque de faisceau et sur le bord 37 de plaque structurelle, et
- le montage du faisceau 5 équipé du joint 9 dans le boîtier 7, en particulier en coulissement sur ledit évidement 45 dans le boîtier 7 depuis son ouverture 21.

Ledit faisceau 5 est ensuite fixé au boîtier 7 au moyen de la bride frontale 15, ici vissée sur un bord d'ouverture 21 du boîtier.

En variantes non illustrés, le revêtement prévu au niveau des rebords des plaques et/ou dudit bord de la plaque structurelle du faisceau pour venir en contact avec le boîtier pourra être un matériau de type colle, résine et/ou matière thermoplastique. Lesdits rebords et/ou ledit bord pourront aussi venir en contact avec ledit boîtier, sans l'intermédiaire d'un revêtement.

L'invention concerne également un module 53 d'admission de moteur de véhicule comportant un échangeur de chaleur tel que décrit ci-dessus et visible en partie à la figure 1.

L'invention apporte ainsi un échangeur de chaleur, notamment refroidisseur d'air de suralimentation de moteur de véhicule, qui est performant, silencieux et fiable.

## Revendications

1. Echangeur (1) de chaleur entre un premier et un second fluide, notamment pour l'alimentation en air d'un moteur thermique de véhicule automobile, comportant au moins un faisceau (5) d'échange de chaleur parcouru par le premier fluide F1 et un boîtier (7) dans lequel ledit faisceau (5) d'échange de chaleur est logé de façon à être traversé par le second fluide F2, le faisceau (5) d'échange de chaleur comportant des plaques (23) de circulation du premier fluide F1 empilées l'une sur l'autre, au moins l'une desdites plaques (23) présentant un rebord (29) disposé entre ledit faisceau (5) d'échange de chaleur et ledit boîtier (7) pour limiter un contournement du faisceau par le second fluide F2, ledit boîtier (7) étant fermé sur l'une de ses faces par une plaque dite bride frontale (15), à laquelle ledit faisceau (5) d'échange de chaleur est fixé et dans lequel ledit faisceau (5) d'échange de chaleur comporte sur une face opposée à ladite bride frontale (15) une plaque, dite plaque structurelle (27), **caractérisé en ce que** ladite plaque structurelle comporte au moins un bord (37) passant par un plan contenant le ou lesdits rebords (29) des plaques.

2. Echangeur de chaleur (1) selon la revendication précédente dans lequel le ou les rebords (29) sont perpendiculaires à un plan d'extension de leur plaque respective.

3. Echangeur de chaleur (1) selon l'une quelconque des revendications précédentes, dans lequel ledit faisceau présente des faces latérales et les rebords (29) s'étendent entre l'une au moins desdites faces latérales et ledit boîtier (7).

4. Echangeur de chaleur (1) selon la revendication précédente dans lequel, au niveau de l'une au moins desdites faces latérales, les rebords (29) sont disposés successivement, le long d'une même direction parallèle à une direction d'empilement desdites plaques.

5. Echangeur de chaleur (1) selon l'une quelconque des revendications précédentes, dans lequel lesdits rebords (29) successifs situés le long d'une même face latérale forment un rebord latéral d'ensemble (30).

6. Echangeur de chaleur (1) selon la revendication 1, dans lequel ledit bord (37) et le ou lesdits rebords (29) forment un contour en U du faisceau.

7. Echangeur de chaleur (1) selon l'une quelconque des revendications 1ou 6 dans lequel le ou lesdits rebords (29) et/ou ledit bord (37) portent un joint apte à s'engager contre une paroi du boîtier et/ou une partie complémentaire (45) du boîtier.

8. Echangeur de chaleur (1) selon l'une quelconque des revendications précédentes dans lequel le ou lesdits rebords (29) sont situés au niveau d'une face de sortie (33) du faisceau (5).

9. Echangeur de chaleur (1) selon l'une quelconque des revendications précédentes, dans lequel lesdits rebords (29) font saillie à partir d'un sommet des plaques (23).

10. Echangeur de chaleur (1) selon la revendications précédente, dans lequel lesdits rebords (29) sont disposés le long d'un bord (35) d'une face longitudinale (33) d'entrée ou de sortie du second fluide du faisceau, en particulier un bord (35) de la face longitudinale de sortie du second fluide du faisceau.

11. Echangeur de chaleur (1) selon l'une quelconque des revendications précédentes, dans lequel ledit boîtier (7) comporte un logement (45) pour le ou lesdits rebords (29), ledit logement (45) étant conformé dans un profil de nervure.

12. Echangeur de chaleur (1) selon la revendication précédente, dans lequel ledit logement (45) est conformé rigide pour permettre une tenue mécanique du faisceau dans le boîtier.

13. Module (53) d'admission de moteur de véhicule comportant un échangeur de chaleur (1) selon l'une quelconque des revendications 1 à 12.

## Patentansprüche

1. Wärmetauscher (1) zwischen einem ersten und einem zweiten Fluid, insbesondere für die Luftversorgung eines Verbrennungsmotors eines Kraftfahrzeugs, umfassend mindestens ein Wärmetauscherbündel (5), das von dem ersten Fluid F1 durchflossen wird, und ein Gehäuse (7), in dem das Wärmetauscherbündel (5) so aufgenommen ist, dass es von dem zweiten Fluid F2 umströmt wird, wobei das Wärmetauscherbündel (5) Zirkulationsplatten (23) für das erste Fluid F1 umfasst, die übereinander gestapelt sind, wobei mindestens eine der Platten (23) eine Randleiste (29) aufweist, die zwischen dem Wärmetauscherbündel (5) und dem Gehäuse (7) angeordnet ist, um ein Umgehen des Bündels durch das zweite Fluid F2 zu begrenzen, wobei das Gehäuse (7) an einer seiner Seiten von einer Stirnflansch (15) genannten Platte verschlossen wird, an der das Wärmetauscherbündel (5) befestigt ist, und wobei das Wärmetauscherbündel (5) auf der dem Stirnflansch (15) entgegengesetzten Seite eine strukturelle Platte (27) genannte Platte umfasst, **dadurch gekennzeichnet, dass** die strukturelle Platte mindestens einen Rand (37) umfasst, der durch eine Ebene verläuft, welche die Randleiste oder die Randleisten (29) der Platten enthält.

2. Wärmetauscher (1) nach dem vorhergehenden Anspruch, bei dem die Randleiste oder die Randleisten (29) senkrecht zu einer Erstreckungsebene ihrer jeweiligen Platte verlaufen.

3. Wärmetauscher (1) nach einem der vorhergehenden Ansprüche, bei dem das Bündel Seitenflächen aufweist und sich die Randleisten (29) zwischen mindestens einer der Seitenflächen und dem Gehäuse (7) erstrecken.

4. Wärmetauscher (1) nach dem vorhergehenden Anspruch, bei dem auf Höhe mindestens einer der Seitenflächen die Randleisten (29) aufeinander folgend entlang derselben Richtung parallel zu einer Stapelrichtung der Platten angeordnet sind.

5. Wärmetauscher (1) nach einem der vorhergehenden Ansprüche, bei dem die entlang derselben Seitenfläche gelegenen aufeinander folgenden Randleisten (29) eine Gesamtseitenrandleiste (30) bilden.

6. Wärmetauscher (1) nach Anspruch 1, bei dem der Rand (37) und die Randleiste oder die Randleisten (29) eine U-förmige Kontur des Bündels bilden.

7. Wärmetauscher (1) nach einem der Ansprüche 1 oder 6, bei dem die Randleiste oder die Randleisten (29) und/oder der Rand (37) eine Dichtung tragen, die geeignet ist, gegen eine Wand des Gehäuses und/oder ein Ergänzungsteil (45) des Gehäuses gesetzt zu werden.

8. Wärmetauscher (1) nach einem der vorhergehenden Ansprüche, bei dem die Randleiste oder die Randleisten (29) auf Höhe einer Austrittsseite (33) des Bündels (5) liegen.

9. Wärmetauscher (1) nach einem der vorhergehenden Ansprüche, bei dem die Randleisten (29) von einem Scheitelpunkt der Platten (23) aus hervorragen.

10. Wärmetauscher (1) nach dem vorhergehenden Anspruch, bei dem die Randleisten (29) entlang eines Randes (35) einer Eintritts- oder Austrittslängsseite (33) des Bündels angeordnet sind, insbesondere eines Randes (35) der Austrittslängsseite des zweiten Fluids des Bündels.

11. Wärmetauscher (1) nach einem der vorhergehenden Ansprüche, bei dem das Gehäuse (7) eine Aufnahme (45) für die Randleiste oder die Randleisten (29) umfasst, wobei die Aufnahme (45) in einem Rippenprofil ausgebildet ist.

12. Wärmetauscher (1) nach dem vorhergehenden Anspruch, bei dem die Aufnahme (45) starr ausgebildet ist, um einen mechanisches Halt des Bündels im Gehäuse zu ermöglichen.

13. Ansaugmodul (53) für den Motor eines Kraftfahrzeugs mit einem Wärmetauscher (1) nach einem der Ansprüche 1 bis 12.

## Claims

1. Heat exchanger (1) for the exchange of heat between a first and a second fluid, notably for supplying air to a motor vehicle combustion engine, comprising at least one heat exchange core bundle (5) through which the first fluid F1 passes and a casing (7) in which said heat exchange core bundle (5) is housed so that the second fluid F2 can pass through it, the heat exchange core bundle (5) comprising plates (23) for the circulation of the first fluid F1 which are stacked on one another, at least one of said plates (23) having a rim (29) placed between said heat exchange core bundle (5) and said casing (7) so as to limit the extent to which the second fluid F2 can bypass the core bundle, said casing (7) being closed along one of its faces by a plate referred to as the frontal flange (15), to which said heat exchange core bundle (5) being fixed and in which said heat exchange core bundle (5) comprises, on a face opposite to said frontal flange (15), a plate referred to as a structural plate (27), **characterized in that** said structural plate comprises at least one edge (37) passing through a plane containing said rim or rims (29) of the plates.

2. Heat exchanger (1) according to the preceding claim, in which the rim or rims (29) are perpendicular to a plane of extension of their respective plate.

3. Heat exchanger (1) according to either one of the preceding claims, in which said core bundle has lateral faces and the rims (29) extend between at least one of said lateral faces and said casing (7) .

4. Heat exchanger (1) according to the preceding claim, in which, at least at one of said lateral faces, the rims (29) are arranged in succession along one and the same direction parallel to a direction of stacking of said plates.

5. Heat exchanger (1) according to any one of the preceding claims, in which said successive rims (29) situated along one and the same lateral face form an overall lateral rim (30).

6. Heat exchanger (1) according to Claim 1, in which said edge (37) and said rim or rims (29) form a U-shaped outline of the core bundle.

7. Heat exchanger (1) according to either one of Claims 1 and 6, in which said rim or rims (29) and/or said edge (37) bears a seal able to engage against a wall of the casing and/or a complementary part (45) of the casing.

8. Heat exchanger (1) according to any one of the preceding claims, in which said rim or rims (29) are situated at the level of an outlet face (33) of the core bundle (5).

9. Heat exchanger (1) according to any one of the preceding claims, in which said rims (29) project from a top of the plates (23).

10. Heat exchanger (1) according to the preceding claim, in which said rims (29) are arranged along an edge (35) of a longitudinal inlet or outlet face (33) via which the second fluid enters or leaves the core bundle, particularly along an edge (35) of the longitudinal outlet face via which the second fluid leaves the core bundle.

11. Heat exchanger (1) according to any one of the preceding claims, in which said casing (7) comprises a housing (45) for said rim or rims (29), said housing (45) being configured in a rib profile.

12. Heat exchanger (1) according to the preceding claim, in which said housing (45) is configured to be rigid so as to allow the core bundle to be mechanically held firmly in the casing.

13. Motor vehicle air intake module (53) comprising a heat exchanger (1) according to any one of Claims 1 to 12.
